# EUROPÄISCHE PATENTSCHRIFT

(11) **EP 2 081 047 B1**
(45) Veröffentlichungstag und Bekanntmachung des Hinweises auf die Patenterteilung: **09.09.2015**
(21) Anmeldenummer: 08105764.8
(22) Anmeldetag: 11.11.2008
(51) Int. Cl.: G01S 7/523, G01S 15/93

(54) **Verfahren zum Betreiben eines Ultraschallsensors und entsprechender Ultraschallsensor**
Method for operating an ultrasound sensor and corresponding ultrasound sensor
Procédé de fonctionnement d'un capteur à ultrasons et capteur à ultrasons correspondant

(30) Priorität: 16.01.2008 DE 102008004630
(43) Veröffentlichungstag der Anmeldung: 22.07.2009
(73) Patentinhaber: Robert Bosch GmbH, 70442 Stuttgart (DE)
(72) Erfinder: Reiche, Martin, 71263 Weil Der Stadt (DE)

(56) Entgegenhaltungen:
- EP-A2- 0 151 003
- WO-A1-95/02197
- US-A1- 2005 261 589
- US-B1- 6 506 160

## Beschreibung

### STAND DER TECHNIK

Die vorliegende Erfindung betrifft ein Verfahren zum Betreiben eines Ultraschallsensors und entsprechender Ultraschallsensor

Obwohl auf beliebige Ultraschallsensoren und in verschiedenen Bereichen anwendbar, werden die vorliegende Erfindung und die ihr zugrundeliegende Problematik im Hinblick auf Pulslaufzeitverfahren nutzende Ultraschallsensoren und deren Einsatz in Kraftfahrzeugen erläutert.

Das Dokument D1 (US 6 506 160 B1) beschreibt ein Verfahren, bei dem empfangene Echodaten von einem Ultraschallaufnehmer zu einem Signalverarbeitungsschaltkreis eines Ultraschallsystems über eine reduzierte Anzahl von Koaxialkabeln übermittelt werden. Das System verwendet dabei ein Frequenzmultiplexverfahren für die analogen Ausgangssignale, die über ein einziges Koaxialkabel vom Ultraschallaufnehmer zum zentralen Computer übertragen werden.

Im Dokument D2 (US 2005/0261589 A1) ist ein Schaltkreischip gezeigt, der einem Bildgebungssystem genügend Informationen liefert, um 3-D Bilder in einem bevorzugten Gebiet zu erzeugen, Der elektronische Schaltkreis erreicht dies durch Bereitstellen eines Verstärkers für jedes Element einer Transducermatrix. Der Ausgang des Verstärkers ist mit der Signalelektronik und weiter mit einem analogen Sample-and-Hold Schaltkreis verbunden. Die gespeicherten Spannungen im analogen Schaltkreis werden von einem Multiplexer ausgelesen und an einen A/D-Wandler des Bildverarbeitungssystems weitergeleitet.

Ultraschallsensoren, insbesondere Pulslaufzeitverfahren nutzende Ultraschallsensoren, werden beispielsweise eingesetzt, um eine automatisierte Umgebungserkundung vorzunehmen, z.B. in Kraftfahrzeugen als Einparkhilfe. Dabei sendet ein Sensor ein Ultraschallsignal aus. Das Ultraschallsignal wird von einem Objekt oder Hindernis reflektiert. Derselbe Sensor oder ein anderer Sensor empfängt das reflektierte Signal (im Folgenden Empfangssignal) und macht sich aus dem Empfangssignal ergebende Schlussfolgerungen über die Umgebung bzw. Hindernisse. Im Falle eines Pulslaufzeitverfahren nutzenden Ultraschallsensors wird ein Signalburst mit einem vorbestimmtem Pulswiederholintervall, einer definierten Burstlänge und einer definierten Signalfrequenz als Ultraschallsignal zur Erkundung der Umgebung gesendet. Im Folgenden wird das Ultraschallsignal bzw. der Signalburst allgemein als Schall-Sendesignal bezeichnet werden.

Bei solchen Ultraschallsensoren wird oft ein aktiv analoger Duplex-Betrieb (z.B. 2-Draht Duplex-Betrieb) eingesetzt. In bekannten Verfahren wird dabei auf einer Leitung im Zeit-Multiplex die Kapazität eines Ultraschallsensors geladen. Bei 3-Draht Konzepten kann ein separater Leiter zur Stromversorgung des Sensors vorgesehen sein. In einem solchen Fall erfolgt der Duplex-Betrieb auf einer gemeinsamen Leitung nur zwischen elektrischen Sendetriggern und elektrischen Empfangssignalen. Ein (elektrischer) Sendetrigger, der den Ultraschallsensor aktiviert und somit das Senden von Schall-Sendesignalen (Ultraschallsignalen bzw. Signalbursts) bzw. akustischen Sendesignalen vom Ultraschallsensor aus aktiviert, wird von einem Steuergerät auf der Resonanzfrequenz eines eingesetzten

Wandlers (in der Regel von 40 - 60 kHz) an den Ultraschallsensor übertragen. Dabei wird aus Kostengründen die Frequenzgenerierung auf dem Steuergerät durch den dort platzierten Controller (µC) erzeugt. Der (elektrische) Sendetrigger beinhaltet z.B. als Rechtecksignal die Sendedauer und die Anregungs- bzw. Resonanzfrequenz.

Befindet sich ein Objekt in der relevanten, d.h. vom Ultraschallsensor zu erforschenden, Umgebung, so wird das Schall- bzw. akustische Sendesignal von diesem Objekt reflektiert. Aufgrund der akustischen Reflektion des Schall- bzw. akustischen Sendesignals an dem Objekt empfängt der Ultraschallsensor ein akustisches Empfangssignal. Das akustische Empfangssignal wird im Ultraschallsensor durch einen Ultraschallwandler in ein elektrisches Signal gewandelt, es wird elektrisch verstärkt und auf die gleiche Leitung AC- gekoppelt, zurück an das Steuergerät übertragen und im Steuergerät ACausgekoppelt. Im Steuergerät wird das ausgekoppelte Empfangssignal einer Komparation unterzogen, wobei die Komparation typischerweise auf Einhüllenden an einem Komparator gegen einen fixen Schwellwert oder gegen eine einfache, z.B. von einem µC ausgegebene Kennlinie ausgeführt wird. Die Einhüllende wird dabei z.B. durch eine nichtkohärente AM-Demodulation (z.B. Gleichrichtung und Tiefpass) realisiert.

Der Duplexbetrieb des Sendetriggers und die Rückübertragung des Empfangssignals erfolgen dabei im gleichen Nutzband um eine Trägerfrequenz, welche der Resonanzfrequenz des eingesetzten Ultraschallwandlers (40 - 60 kHz) gleich oder identisch ist. Das Verwenden gleicher oder gar identischer Frequenzen sowohl für den Sendetrigger als auch für das analoge Rückübertragen des elektrischen Empfangssignals erfordert ein aufwändiges Verriegeln der Sendeauslösung im Ultraschallsensor. Einer Verriegelung der Sendeauslösung bedarf es, da die an den Sensor elektrisch zurück übertragenen bzw. reflektierten Empfangssignale Grund für eine unbeabsichtigte Sendeauslösung sein können.

### VORTEILE DER ERFINDUNG

Das in Anspruch 1 definierte erfindungsgemäße Verfahren zum Betreiben eines Ultraschallsensors, der in Anspruch 9 definierte erfindungsgemäße Ultraschallsensor und die erfindungsgemäße Vorrichtung zum Steuern des Ultraschallsensors gemäß Anspruch 13 bieten gegenüber herkömmlichen Lösungen den Vorteil, dass es keiner aufwendigen Verriegelung der Sendeauslösung bedarf.

Das Übertragen eines Sendetriggers an den Ultraschallsensor von einer Vorrichtung zum Steuern des Ultraschallsensors bzw. von einem Steuergerät aus, um ein akustisches Sendesignal auszulösen, wird über einen ersten Duplex-Kanal bei einem Vielfachen der Resonanzfrequenz eines im Ultraschallsensor eingerichteten Ultraschallswandlers durchgeführt. Der Ultraschallsensor weist eine Elektronik und ein elektroakustisches Element auf, das zum Senden und Empfangen von Ultraschallsignalen dient. Im Folgenden wird das elektroakustische Element als Ultraschallwandler bezeichnet werden.

Im Ultraschallsensor wird dann der Sendetrigger so heruntergeteilt, dass dieser wieder bei der Resonanzfrequenz des Ultraschallwandlers liegt. Akustische Empfangsignale, die beim Erforschen der Umgebung nach dem Senden eines akustischen Sendesignals (Ultraschallsignals bzw. eines Signalbursts) vom Ultraschallsensor bei der Resonanzfrequenz des Ultraschallwandlers empfangen werden, werden vom Wandler in elektrische Signale gewandelt, sie werden elektrisch verstärkt und dann über einen zweiten Duplex-Kanal im Frequenzband des Ultraschallwandlers an das Steuergerät elektrisch übertragen. Dadurch kann ein rückübertragenes elektrisches Empfangssignal keine unbeabsichtigte Sendeauslösung erzeugen, da die Duplex-Kanäle, über die Sendetrigger vom Steuergerät zum Ultraschallsensor und elektrische Empfangssignale vom Ultraschallsensor zum Sendegerät übertragen werden, auf der Leitung bzw. im verwendeten Band durch das erfindungsgemäße Verwenden spektral separiert sind. Die entsprechenden Duplex-Kanäle bzw. die Sendetrigger und die elektrischen Empfangssignale sind zwar auf einem gemeinsamen Leiter als "Physical Layer" realisiert, aber durch Frequenz-Bandwahl und die Art der Ein- oder Auskopplung auf den Leiter separiert.

Die der vorliegenden Erfindung zugrunde liegende Idee besteht somit darin, die zum Übertragen von Sendetriggern und zum Übertragen von elektrischen Empfangssignalen verwendeten Duplex-Kanäle auf der Leitung spektral zu separieren, in dem die Sendetrigger bei einem Vielfachen der Resonanzfrequenz des Ultraschallwandlers des Ultraschallsensors vom Steuergerät zum Ultraschallsensor übertragen werden und die elektrischen Empfangssignale bei der Resonanzfrequenz des Ultraschallwandlers des Ultraschallsensors vom Steuergerät zum Ultraschallsensor übertragen werden.

Des Weiteren, da es keiner aufwändigen Sendeverriegelung bedarf, fällt durch die vorliegende Erfindung ein deutlich geringerer Bauteileaufwand im Sendegerät und im Ultraschallsensor an.

Die in den Unteransprüchen aufgeführten Merkmale beziehen sich auf vorteilhafte Weiterbildungen und Verbesserungen des Gegenstandes der Erfindung.

Gemäß einer bevorzugten Weiterbildung erfolgt das Aufprägen des zumindest eines von dem Ultraschallsensor zu dem Steuergerät zu übertragenden elektrischen Empfangssignals auf die Leitung durch eine Stromquelle. Die oben skizzierten bisherigen Lösungen verwenden zum Aufprägen von elektrischen Empfangssignalen eine AC-angebundene Spannungsquelle. Durch das erfindungsgemäße Aufprägen durch eine Stromquelle wird eine verbesserte Störfestigkeit gegen einkoppelnde E-Felder im Langwellenbereich erreicht. Des Weiteren wird eine weitere Kanalseparation zusätzlich zur spektralen Separation erreicht, da der zum Übertragen von Sendetriggern verwendete Kanal spannungsgetrieben und zum Übertragen von elektrischen Empfangssignalen verwendete Kanal stromgetrieben ist.

Gemäß der bevorzugten Weiterbildung kann beispielsweise zu Treibern oder Sendern bzw. Sendeoder Übertragungsvorrichtungen der Sendetrigger und/oder elektrischen Empfangssignale entsprechende Detektoren als Empfänger am Ende der jeweiligen Leitung eingerichtet werden. Für den Spannungsbetrieb kann z.B. ein hochohmiger Detektor und für den Strombetrieb ein niederohmiger Detektor am Ende der jeweiligen Leitung eingerichtet werden.

Ferner erlaubt die vorliegende Erfindung auch das Separieren von Bias-Spannungspegeln der Sendetriggern und der elektrischen Empfangssignale. Dadurch gibt es keinen expliziten Aufladezustand einer zwangsläufig großen Sensorkapazität. Die Bestromung des Ultraschallsensors erfolgt kontinuierlich während des Empfangs. Auf diese Weise wird das Verwenden einer Spule im Steuergerät, die ein teueres Bauteil darstellt, überflüssig.

Gemäß einer weiteren bevorzugten Weiterbildung kann das Tastverhältnis des Trigger-Signals variiert werden. Dadurch können Informationen eines gewünschten Sendestrompegels übertragen werden. Diese Informationen können zusätzlich zu den Informationen Sendedauer und Sendefrequenz übertragen werden.

Ferner kann ein Sendestrom verwendet werden, der dem Sendeschalldruck proportional ist. Dadurch kann ein Sendetrigger auf einfache Weise Informationen wie Sendefrequenz, Burstlänge und Sendepegel enthalten, die zum Betreiben des Ultraschallsensors bzw. zum Senden von Signalbursts (d.h. akustischen Sendesignalen bzw. Ultraschallsignalen) zum Erforschen und Scannen der Umgebung wichtig sind.

### ZEICHNUNGEN

Ausführungsbeispiele der Erfindung sind in Zeichnungen dargestellt und in der nachfolgenden Beschreibung näher erläutert.

Es zeigen:
Fig. 1 zeigt ein Flussdiagramm des Verfahrens zum Betreiben eines Ultraschallsensors im Duplex-Betrieb gemäß einer Ausführungsform der vorliegenden Erfindung; und
Fig. 2 ein Blockdiagramm des Ultraschallsensors und der Vorrichtung zum Steuern des Ultraschallsensors bzw. des Steuergeräts gemäß einer Ausführungsform der vorliegenden Erfindung.

### BESCHREIBUNG VON AUSFÜHRUNGSBEISPIELEN

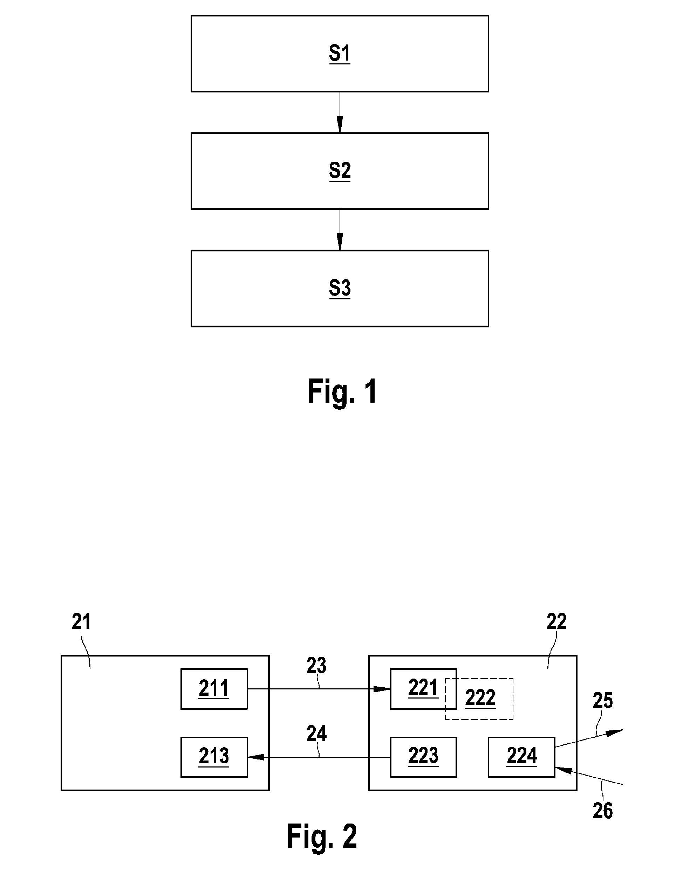

Fig. 1 ein Flussdiagramm des Verfahrens zum Betreiben eines Ultraschallsensors im Duplex-Betrieb gemäß einer Ausführungsform der vorliegenden Erfindung.

Insbesondere betrifft das Verfahren der Fig. 1 das Betreiben eines Ultraschallsensors, welches ein Pulslaufzeitverfahren nutzt. Die Schritte des Verfahrens zum Betreiben eines Ultraschallsensors gemäß einer Ausführungsform der vorliegenden Erfindung werden im Folgenden beispielhaft beim Einsetzen des Ultraschallsensors als Einparkhilfe in einem Auto erläutert.

In einem ersten Schritt S1 wird von einem Steuergerät ein Sendetrigger (z.B. ein Rechtecksignal der Länge 300 µs, auf Frequenz 100 kHz) zum Auslösen eines akustischen Sendesignals über einen ersten Duplex-Kanal bei einem Vielfachen der Resonanzfrequenz des Ultraschallwandlers des Ultraschallsensors an den Ultraschallsensor (elektrisch) übertragen. Somit wird angezeigt, dass das Untersuchen bzw. Scannen der Umgebung nach möglichen Hindernissen beim Einparken des Autos gestartet werden soll.

Der bei einem Vielfachen der Resonanzfrequenz des Ultraschallwandlers des Ultraschallsensors übertragene Sendetrigger wird im Ultraschallsensor empfangen und in Schritt S2 auf die Resonanzfrequenz des Ultraschallwandlers heruntergeteilt. D.h., wenn die Resonanzfrequenz des Ultraschallwandlers beispielsweise bei 50 kHz liegt, und als Vielfaches z.B. die Zahl 2 gewählt wird, wird der Sendetrigger bei 50*2 kHz bzw. 100 kHz vom Steuergerät zum Ultraschallsensor übertragen und im Ultraschallsensor auf 50 kHz der Resonanzfrequenz des Ultraschallwandlers heruntergeteilt.

Nach dem Empfangen und Herunterteilen S2 des Sendetriggers, sendet der Ultraschallsensor mittels des Ultraschallwandlers ein akustisches Sendesignal aus, um die Umgebung des Autos zum Beispiel nach möglichen Hindernissen beim Einparken zu scannen. Wie oben bereits angedeutet, kann das akustische Sendesignal beispielsweise ein Ultraschallsignal oder ein Signalburst mit einer definierten Burstlänge und einer definierten Signalfrequenz sein. Ein Pulswiederholintervall kann sich dabei aus dem durch das Steuergerät repetierten Sendetrigger ergeben. Mit dem heruntergeteilten Sendetrigger wird der Ultraschallwandler im Ultraschallsensor über einen Sendestromtreiber zu einer akustischen Sendeauslösung 25 angeregt (z.B. zum Senden von Sende-Schallbursts der Länge 300µs auf Grundfrequenz 50kHz). Der Wandler kann in diesem Moment als eine Art Lautsprecher gesehen werden.

Sind Objekte, die das Einparken beeinträchtigen könnten, in der nahen, für das Einparken relevanten Umgebung vorhanden, wird das akustische Sendesignal von solchen Objekten reflektiert. Das zumindest eine reflektierte akustische Signal ist das zumindest eine dem akustischen Sendesignal entsprechende akustische Empfangssignal, das Informationen zu dem Objekt mitüberträgt, z.B. die Entfernung des Objekts, die proportional ist der Zeit zwischen Senden und Empfangen des akustischen Signals. Das reflektierte akustische Sendesignal bzw. das akustische Empfangssignal 26 wird nach einer zeitlichen Verzögerung gemäß der Schalllaufzeit und Entfernung des Objekts vom Sensorwandler empfangen. In Schritt S3 wird das empfangene, zumindest eine akustische Empfangssignal vom Ultraschallwandler in ein elektrisches Empfangssignal gewandelt und dann vom Sensor über einen zweiten Duplex-Kanal mit der Resonanzfrequenz des Ultraschallwandlers des Ultraschallsensors, hier 50 kHz, an das Steuergerät zur weiteren Auswertung elektrisch übertragen. Der Wandler wandelt das akustische Empfangssignal in ein elektrisches Empfangssignal wie Mikrofon. Das elektrische Empfangssignal kann dabei bei Bedarf noch weiter verstärkt werden.

Gemäß der vorliegenden Erfindung kann ein Band zum Übertragen des Sendetrigger entsprechend des Einsatzgebietes derart ausgesucht werden, dass Interferenzen mit anderen, sich in der nahen Umgebung befindlichen Geräten beim Übertragen von elektrischen Signalen (Sendetargets, Empfangssignalen, Ultraschallsignalen) deutlich reduziert werden können. Nur das Triggerband ist quasi wahlfrei durch den Teiler im Ultraschallsensor, der analoge Empfangskanal bei 50kHz liegt durch die Resonanz des Ultraschallwandlers fest.

Das zumindest eine von dem Ultraschallsensor zu dem Steuergerät zu übertragende, elektrische Empfangssignal kann durch eine Stromquelle aufgeprägt werden. Der Sendetrigger kann wiederum durch eine Spannungsquelle auf die Leitung aufgeprägt werden. Durch das spannungsgetriebene Übertragen von Sendetriggern und das stromgetriebene bzw. elektrische Übertragen von akustischen Empfangssignalen wird eine zusätzliche Separation der entsprechenden Duplex-Kanäle erreicht.

Gemäß der bevorzugten Weiterbildung kann beispielsweise zu Übertragen der Sendetrigger und/oder elektrischen Empfangssignale entsprechende Detektoren als Empfänger am Ende der jeweiligen Leitung eingerichtet werden. Für den Spannungsbetrieb kann z.B. ein hochohmiger Detektor und für den Strombetrieb ein niederohmiger Detektor am Ende der jeweiligen Leitung eingerichtet werden. D.h., das zumindest eine elektrische Empfangssignal kann durch einen niederohmigen Detektor im Steuergerät und/oder der Sendetrigger durch einen hochohmigen Detektor im Sensor empfangen werden.

Des Weiteren kann das Tastverhältnis des Sendestriggers variiert werden, wodurch weitere Informationen wie die eines gewünschten Sendestrompegels übertragen werden. Diese Informationen können zusätzlich zu den Informationen Sendedauer und Sendefrequenz übertragen werden. Ferner kann im Sensor ein Sendestrom zur Anregung des Ultraschallwandlers verwendet werden, welcher dem Sendeschalldruck proportional ist.

Fig. 2 zeigt ein Blockdiagramm des Ultraschallsensors und der Vorrichtung zum Steuern des Ultraschallsensors bzw. des Steuergeräts gemäß einer Ausführungsform der vorliegenden Erfindung.

Fig. 2 zeigt eine Vorrichtung zum Steuern eines Ultraschallsensors bzw. ein Steuergerät 21 und den Ultraschallsensor 22 selbst. Der Ultraschallsensor 22 ist duplexbetrieben und in Fig. 2 über zwei Duplex-Kanäle 23 und 24 mit dem Steuergerät zur Kommunikation von Daten bzw. Signalen verbunden.

Das Steuergerät 21 weist eine Sende- bzw. Übertragungseinrichtung 211 zum Übertragen eines Sendetriggers (z.B. eines Rechtecksignals der Länge 300 µs auf Frequenz 100 kHz) bei einem Vielfachen der Resonanzfrequenz eines Ultraschallwandlers 224 des Ultraschallsensors 22 über den Duplex-Kanal 23 an den Ultraschallsensor 22 und eine Empfangseinrichtung 213 zum Empfangen zumindest eines dem akustischen Sendesignal 25 entsprechenden und entsprechend der akustischen Signallaufzeit zu einem reflektierenden Objekt zeitversetztem elektrischen Empfangssignals, das über den Duplex-Kanal 24 von dem Ultraschallsensor 22 an das Steuergerät 21 mit der Resonanzfrequenz des Ultraschallwandlers 224 des Ultraschallsensors übertragen wird.

Der in Fig. 2 gezeigte Ultraschallsensor 22 verfügt über eine Empfangseinrichtung 221 zum Empfangen eines bei einem Vielfachen der Resonanzfrequenz des Ultraschallwandlers 224 des Ultraschallsensors 22 über einen ersten Duplex-Kanal 23 übertragenen (elektrischen) Sendetriggers (z.B. eines Rechtecksignals der Länge 300µs auf Frequenz 100kHz) zum Auslösen eines akustischen Sendesignals 25. Des Weiteren weist der Ultraschallsensor 22 eine Herunterteilungseinrichtung 222, wie z.B. einen FlipFlop, zum Herunterteilen des (elektrischen) Sendetriggers auf die Resonanzfrequenz des Wandlers 224 und eine Sende- bzw. Übertragungseinrichtung 223 zum Übertragen zumindest eines dem akustischen Sendesignal 25 entsprechenden elektrischen Empfangssignals mit Resonanzfrequenz des Ultraschallwandlers 224 des Ultraschallsensors 22 über einen zweiten Duplex-Kanal 24.

Das Übertragen eines Sendetriggers von dem Steuergerät 21 zu dem Ultraschallsensor 22 ist in Fig. 2 mit einem Pfeil, der auch den entsprechenden, zum Übertragen verwendeten Duplex-Kanal 23 anzeigt, angegeben. Der Sendetrigger wird von der Sende- bzw. Übertragungseinrichtung 211 des Steuergeräts 21 zu der Empfangseinrichtung 221 des Ultraschallgeräts 22 übertragen.

Das Übertragen eines elektrischen Empfangssignals von dem Ultraschallsensor 22 zum Steuergerät 21 ist in Fig. 2 mit einem Pfeil, der zugleich auch den entsprechenden zum Übertragen verwendeten Duplex-Kanal 24 anzeigt, angegeben. Das elektrische Empfangssignal wird von der Sende- bzw. Übertragungseinrichtung 223 des Ultraschallgeräts 22 zu der Empfangseinrichtung 213 des Steuergeräts 21 übertragen. Wie bereits erwähnt, wird das elektrische Empfangssignal gewonnen, indem das akustische Sendesignal 25 von einem reflektierenden Objekt reflektiert wird, ein akustisches Empfangssignal 26 als das von dem Objekt reflektierte Signal vom Ultraschallsensor 22 empfangen und in das elektrische Empfangssignal umgewandelt wird. Der Ultraschallsensor 22 ist also ausgestaltet, das akustischen Empfangssignal 26 in ein elektrisches Empfangssignal umzuwandeln, z.B. mittels eines im Ultraschallsensor eingesetzten Wandlers.

Wie vorstehend bereits erläutert können Sendetrigger gemäß einer Weiterbildung spannungsgetrieben übertragen werden. Des Weiteren können elektrische Empfangssignale wiederum stromgetrieben übertragen werden.

Werden Sendetrigger über den Duplex-Kanal 23 spannungsgetrieben übertragen, weist die Sende- bzw. Übertragungseinrichtung 213 des Steuergeräts 21 eine Spannungsquelle zum spannungsgetriebenen Aufprägen von Sendetriggern auf die Leitung auf und die Empfangseinrichtung 221 des Ultraschallsensors 22 weist wiederum ihrerseits einen hochohmigen Detektor zum Empfangen der Sendetrigger auf.

Werden elektrische Empfangssignale stromgetrieben übertragen, weist die Sende- bzw. Übertragungseinrichtung 223 des Ultraschallsensors 22 eine Stromquelle zum stromgetriebenen Aufprägen der elektrischen Empfangssignale auf die Leitung auf und die Empfangseinrichtung 213 des Steuergeräts 21 weist wiederum ihrerseits einen niederohmigen Detektor zum Empfangen von elektrischen Empfangssignalen auf.

Somit stellt die vorliegende Erfindung ein Betreiben eines Ultraschallsensors im Duplex-Betrieb dar. Dieses wird, wie oben detailliert ausgeführt, durch ein Verfahren zum Betreiben eines Ultraschallsensors im Duplex-Betrieb, ein entsprechendes Ultraschallsteuergerät und eine entsprechende Vorrichtung 21 zum Steuern des Ultraschallsensors 22 erreicht. Dabei wird ein (elektrischer) Sendetrigger zum Auslösen eines akustischen Sendesignals 25 über einen ersten Duplex-Kanal 23 bei einem Vielfachen einer Resonanzfrequenz eines Ultraschallwandlers 224 des Ultraschallsensors 22 von der Vorrichtung 21 zum Steuern des Ultraschallsensors 22 an den Ultraschallsensor 22 übertragen S1; der Sendetrigger mittels einer Herunterteilungseinrichtung 222 im Ultraschallsensor 22 auf die Resonanzfrequenz des Wandlers 224 heruntergeteilt S2 und mit diesem heruntergeteilten Signal der Wandler durch eine Sendestufe angesteuert, der dann eine akustische Sendeauslösung erzeugt ; und zumindest ein dem akustischen Sendesignal 25 der akustischen Laufzeit bzgl. der Reflektion an einem Objekt verzögerte akustische Empfangssignal 26 vom Ultraschallsensor 22 mittels des Wandlers in ein elektrisches Empfangssignal gewandelt, und das elektrische Empfangssignal über einen zweiten Duplex-Kanal 24 mit der Resonanzfrequenz des Ultraschallwandlers 224 des Ultraschallsensors 22 von dem Ultraschallsensor 22 zu der der Vorrichtung 21 zum Steuern des Ultraschallsensors 22 übertragen S3.

Obwohl die vorliegende Erfindung vorstehend anhand bevorzugter Ausführungsbeispiele beschrieben wurde, ist sie darauf nicht beschränkt, sondern auf vielfältige Weise modifizierbar.

So zum Beispiel können verschiedene geeignete Komponenten entsprechend ihrer Funktion im Ultraschallsensor und Sendetrigger eingesetzt werden. Die Erfindung ist z.B. nicht auf einen FlipFlop zum Herunterteilen des Sendetriggers beschränkt.

Gemäß der vorliegenden Erfindung können je nach Situation und Umgebung verschiedene Frequenzbereiche genutzt werden. Die Resonanzfrequenz des Ultraschallwandlers des Ultraschallsensors ist nicht auf 50 kHz und das Vielfache ist nicht nur auf die Zahl 2 beschränkt. Als Vielfache könne beispielsweise eine Zahl 2ⁿ gewählt werden, aber auch diese Möglichkeit ist nicht als einschränkend zu sehen.

## Patentansprüche

1. Verfahren zum Betreiben eines Ultraschallsensors (22) im Frequenzduplex-Betrieb, das die folgenden Schritte aufweist:
- Übertragen (S1) eines Sendetriggers über einen ersten Frequenzduplex-Kanal (23) bei einem Vielfachen der Resonanzfrequenz eines Ultraschallwandlers (224) des Ultraschallsensors (22) an den Ultraschallsensor (22) zum Auslösen eines akustischen Sendesignals (25);
- Herunterteilen (S2) des Sendetriggers im Ultraschallsensor (22); und
- Übertragen (S3) zumindest eines dem akustischen Sendesignal (25) entsprechenden elektrischen Empfangssignals vom Ultraschallsensor (22) über einen zweiten Frequenzduplex-Kanal (24) mit der Resonanzfrequenz des Ultraschallwandlers (224) des Ultraschallsensors (22).

2. Verfahren nach Anspruch 1, wobei das Verfahren ein Aufprägen des zumindest einen elektrischen Empfangssignals durch eine Stromquelle aufweist.

3. Verfahren nach Anspruch 2, wobei das Verfahren ein Empfangen des zumindest einen elektrischen Empfangssignals durch einen niederohmigen Detektor aufweist.

4. Verfahren nach einem der vorstehenden Ansprüche, wobei der Sendetrigger durch eine Spannungsquelle auf die Leitung aufgeprägt wird.

5. Verfahren nach Anspruch 4, wobei das Verfahren ein Empfangen des Sendetriggers durch einen hochohmigen Detektor aufweist.

6. Verfahren nach einem der vorstehenden Ansprüche, wobei das Verfahren ein Variieren des Tastverhältnisses des Sendetriggers zum weiteren Übertragen von Informationen aufweist, wodurch weitere Informationen wie die eines gewünschten Sendestrompegelsübertragen werden.

7. Verfahren nach einem der vorstehenden Ansprüche, wobei das Verfahren ein Verwenden eines Sendestroms aufweist, der dem Sendeschalldruck proportional ist.

8. Ultraschallsensor (22) mit:
- einer Empfangseinrichtung (221) zum Empfangen eines bei einem Vielfachen der Resonanzfrequenz eines Ultraschallwandlers (224) des Ultraschallsensors (22) über einen ersten Frequenzduplex-Kanal (23) übertragenen Sendetriggers zum Auslösen eines akustischen Sendesignals (25);
- einer Herunterteilungseinrichtung (222) zum Herunterteilen des Sendetriggers; und
- einer Übertragungseinrichtung (223) zum Übertragen zumindest eines dem akustischen Sendesignal entsprechenden elektrischen Empfangssignals mit Resonanzfrequenz eines Ultraschallwandlers (224) des Ultraschallsensors (22) über einen zweiten Frequenzduplex-Kanal (24).

9. Ultraschallsensor (22) nach Anspruch 9, wobei der erste Frequenzduplex-Kanal (23) ausgestaltet ist, den Sendetrigger spannungsgetrieben zu übertragen.

10. Ultraschallsensor (22) nach Anspruch 10, wobei die Empfangseinrichtung (221) einen hochohmigen Detektor zum Empfangen des Sendetriggers aufweist.

11. Ultraschallsensor (22) nach einem der Ansprüche 9 bis 11, wobei die Übertragungseinrichtung (223) eine Stromschnittstelle zum stromgetriebenen Übertragen des elektrischen Empfangssignals (26) aufweist.

12. Steuervorrichtung (21) eines Ultraschallsensors (22) nach Anspruch 9 mit:
- einer Übertragungseinrichtung (211) zum Übertragen des Sendetriggers zum Auslösen des akustischen Sendesignals (25) bei einem Vielfachen der Resonanzfrequenz eines Ultraschallwandlers (224) des Ultraschallsensors (22) an den Ultraschallsensor (22) über den ersten Frequenzduplex-Kanal (23); und
- einer Empfangseinrichtung (213) zum Empfangen zumindest des einen von dem Ultraschallsensor (22) mit der Resonanzfrequenz des Ultraschallwandlers (224) des Ultraschallsensors (22) über den zweiten Frequenzduplex-Kanal (24) übertragenen und dem akustischen Sendesignal (25) entsprechenden elektrischen Empfangssignals.

13. Vorrichtung (21) nach Anspruch 13, wobei der zweite Frequenzduplex-Kanal (24) ausgestaltet ist, das Empfangssignal stromgetrieben zu übertragen.

14. Vorrichtung (21) nach Anspruch 14, wobei die Empfangseinrichtung (213) einen niederohmigen Detektor zum Empfangen des elektrischen Empfangssignals aufweist.

15. Vorrichtung (21) nach einem der Ansprüche 13 bis 15, wobei die Übertragungseinrichtung (213) eine Spannungsschnittstelle zum spannungsgetriebenen Übertragen des Sendetriggers aufweist.

## Claims

1. Method for operating an ultrasound sensor (22) in the frequency division duplex mode, which method has the following steps of:
- transmitting (S1) a transmission trigger to the ultrasound sensor (22) at a multiple of the resonant frequency of an ultrasound transducer (224) of the ultrasound sensor (22) via a first frequency division duplex channel (23) for the purpose of triggering an acoustic transmission signal (25);
- dividing down (S2) the transmission trigger in the ultrasound sensor (22); and
- transmitting (S3) at least one electrical reception signal corresponding to the acoustic transmission signal (25) from the ultrasound sensor (22) at the resonant frequency of the ultrasound transducer (224) of the ultrasound sensor (22) via a second frequency division duplex channel (24).

2. Method according to Claim 1, the method comprising impressing the at least one electrical reception signal by means of a current source.

3. Method according to Claim 2, the method comprising receiving the at least one electrical reception signal by means of a low-impedance detector.

4. Method according to one of the preceding claims, the transmission trigger being impressed onto the line by means of a voltage source.

5. Method according to Claim 4, the method comprising receiving the transmission trigger by means of a high-impedance detector.

6. Method according to one of the preceding claims, the method comprising varying the duty ratio of the transmission trigger for the further transmission of information, as a result of which further information, such as that relating to a desired transmission current level, is transmitted.

7. Method according to one of the preceding claims, the method comprising using a transmission current which is proportional to the transmission sound pressure.

8. Ultrasound sensor (22) having:
- a receiving device (221) for receiving a transmission trigger transmitted at a multiple of the resonant frequency of an ultrasound transducer (224) of the ultrasound sensor (22) via a first frequency division duplex channel (23) for the purpose of triggering an acoustic transmission signal (25);
- a dividing-down device (222) for dividing down the transmission trigger; and
- a transmission device (223) for transmitting at least one electrical reception signal corresponding to the acoustic transmission signal at the resonant frequency of an ultrasound transducer (224) of the ultrasound sensor (22) via a second frequency division duplex channel (24).

9. Ultrasound sensor (22) according to Claim 9, the first frequency division duplex channel (23) being configured to transmit the transmission trigger in a voltage-driven manner.

10. Ultrasound sensor (22) according to Claim 10, the receiving device (221) having a high-impedance detector for receiving the transmission trigger.

11. Ultrasound sensor (22) according to one of Claims 9 to 11, the transmission device (223) having a current interface for transmitting the electrical reception signal (26) in a current-driven manner.

12. Control apparatus (21) of an ultrasound sensor (22) according to Claim 9, having:
- a transmission device (211) for transmitting the transmission trigger for triggering the acoustic transmission signal (25) to the ultrasound sensor (22) at a multiple of the resonant frequency of an ultrasound transducer (224) of the ultrasound sensor (22) via the first frequency division duplex channel (23); and
- a receiving device (213) for receiving at least the one electrical reception signal which is transmitted from the ultrasound sensor (22) at the resonant frequency of the ultrasound transducer (224) of the ultrasound sensor (22) via the second frequency division duplex channel (24) and corresponds to the acoustic transmission signal (25).

13. Apparatus (21) according to Claim 13, the second frequency division duplex channel (24) being configured to transmit the reception signal in a current-driven manner.

14. Apparatus (21) according to Claim 14, the receiving device (213) having a low-impedance detector for receiving the electrical reception signal.

15. Apparatus (21) according to one of Claims 13 to 15, the transmission device (213) having a voltage interface for transmitting the transmission trigger in a voltage-driven manner.

## Revendications

1. Procédé de fonctionnement d'un capteur à ultrasons (22) en fonctionnement à duplex de fréquence, comportant les étapes suivantes :
- transmission (S1) d'un déclencheur d'envoi via un premier canal de duplex de fréquence (23) pour un multiple de la fréquence de résonance d'un convertisseur d'ultrasons (224) du capteur à ultrasons (22) au niveau du capteur à ultrasons (22) pour déclencher un signal d'envoi acoustique (25) ;
- division (S2) du déclencheur d'envoi dans le capteur à ultrasons (22) ; et
- transmission (S3) d'au moins un signal de réception électrique correspondant au signal d'envoi acoustique (25) en provenance du capteur à ultrasons (22) via un deuxième canal de duplex de fréquence (24) avec la fréquence de résonance du convertisseur d'ultrasons (224) du capteur à ultrasons (22).

2. Procédé selon la revendication 1, le procédé comportant un marquage de l'au moins un signal de réception électrique par une source de courant.

3. Procédé selon la revendication 2, le procédé comportant une réception de l'au moins un signal de réception électrique par un détecteur à faible impédance.

4. Procédé selon l'une quelconque des revendications précédentes, le déclencheur d'envoi étant marqué sur le câble par une source de tension.

5. Procédé selon la revendication 4, le procédé comportant une réception du déclencheur d'envoi par un détecteur à forte impédance.

6. Procédé selon l'une quelconque des revendications précédentes, le procédé comportant une variation du rapport de palpation du déclencheur d'envoi pour la transmission supplémentaire des informations, transmettant ainsi les informations supplémentaires comme celles d'un niveau de courant d'envoi souhaité.

7. Procédé selon l'une quelconque des revendications précédentes, le procédé comportant une utilisation d'un courant d'envoi proportionnel à la pression acoustique d'envoi.

8. Capteur à ultrasons (22) avec :
- un dispositif de réception (221), pour recevoir un déclencheur d'envoi transmis via un premier canal de duplex de fréquence (23) pour un multiple de la fréquence de résonance d'un convertisseur d'ultrasons (224) du capteur à ultrasons (22), pour déclencher un signal d'envoi acoustique (25) ;
- un dispositif de division (222) ; pour diviser le déclencheur d'envoi ; et
- un dispositif de transmission (223), pour transmettre au moins un signal de réception électrique correspondant au signal d'envoi acoustique avec la fréquence de résonance d'un convertisseur d'ultrasons (224) du capteur à ultrasons (22) via un deuxième canal de duplex de fréquence (24).

9. Capteur à ultrasons (22) selon la revendication 9, le premier canal de duplex de fréquence (23) étant configuré pour transmettre le déclencheur d'envoi grâce à une transmission de tension.

10. Capteur à ultrasons (22) selon la revendication 10, le dispositif de réception (221) comportant un détecteur à forte impédance pour recevoir le déclencheur d'envoi.

11. Capteur à ultrasons (22) selon l'une quelconque des revendications 9 à 11, le dispositif de transmission (223) comportant une interface de courant pour la transmission du signal de réception électrique (26) grâce à une transmission de courant.

12. Dispositif de commande (21) d'un capteur à ultrasons (22) selon la revendication 9, avec :
- un dispositif de transmission (211) pour la transmission du déclencheur d'envoi, pour déclencher le signal d'envoi acoustique (25) pour un multiple de la fréquence de résonance d'un convertisseur d'ultrasons (224) du capteur à ultrasons (22) au niveau du capteur à ultrasons (22) via le premier canal de duplex de fréquence (23) ; et
- un dispositif de réception (213), pour recevoir au moins le signal de réception électrique correspondant au signal d'envoi acoustique (25) et transmis par le capteur à ultrasons (22) avec la fréquence de résonance du convertisseur d'ultrasons (224) du capteur à ultrasons (22) via le deuxième canal de duplex de fréquence (24).

13. Dispositif (21) selon la revendication 13, le deuxième canal de duplex de fréquence (24) étant configuré pour transmettre le signal de réception grâce à une transmission de courant.

14. Dispositif (21) selon la revendication 14, le dispositif de réception (213) comportant un détecteur à faible impédance pour recevoir le signal de réception électrique.

15. Dispositif (21) selon l'une quelconque des revendications 13 à 15, le dispositif de transmission (213) comportant une interface de tension pour la transmission du déclencheur d'envoi grâce à une transmission de tension.
